# FASCICULE DE BREVET EUROPEEN

(11) **EP 2 249 675 B1**
(45) Date de publication et mention de la délivrance du brevet: **09.05.2012**
(21) Numéro de dépôt: 09836135.5
(22) Date de dépôt: 23.01.2009
(51) Int. Cl.: A45C 5/14, B62K 3/00

(54) **BAGAGE À ROULETTES PERFECTIONNÉ**
VERBESSERTES GEPÄCKSTÜCK MIT ROLLEN
IMPROVED PIECE OF LUGGAGE WITH CASTERS

(30) Priorité: 31.01.2008 FR 0800527
(43) Date de publication de la demande: 17.11.2010
(73) Titulaire: Vincent-Genod, Bruno, 92200 Neuilly sur Seine (FR)
(72) Inventeur: Vincent-Genod, Bruno, 92200 Neuilly sur Seine (FR)
(74) Mandataire: Bezault, Jean
(86) Numéro de dépôt international: PCT/FR2009/000074
(87) Numéro de publication internationale: WO 2010/076397

(56) Documents cités:
- EP-A- 0 836 985
- WO-A-02/45539
- WO-A-98/46475
- FR-A- 2 818 100
- FR-A- 2 849 751
- NL-C1- 1 030 892
- US-B1- 6 460 866

## Description

L'invention se rapporte au domaine des bagages et plus particulièrement des bagages à roulettes.

On connaît déjà des bagages de ce type, qui comprennent un caisson avec un fond muni de deux roulettes espacées et un sommet prolongé par une poignée, généralement télescopique, pour le déplacement du caisson dans une position sensiblement verticale.

Le bagage peut ainsi être utilisé selon deux modes différents : un mode de portage classique dans lequel le bagage est soulevé du sol et porté par la poignée en position rentrée et un mode de roulage dans lequel le bagage est roulé sur le sol et tiré par la poignée en position sortie. Dans le premier mode les roulettes sont inopérantes, tandis que dans le second mode les roulettes roulent sur le sol et soulagent les efforts de l'utilisateur.

Compte tenu de leur polyvalence ces bagages rencontrent un grand succès auprès du public et sont produits dans une grande variété de formes et de dimensions.

Toutefois, en mode de roulage, le déplacement d'un tel bagage peut être pénible pour certaines personnes, surtout lorsque ce déplacement s'effectue sur une grande distance et que le poids du bagage est élevé.

C'est en conséquence l'un des buts de l'invention de proposer un bagage du type précité qui soit équipé de moyens pour faciliter son déplacement dans le mode de roulage au sol.

L'invention propose à cet effet un bagage du type défini en introduction, lequel comprend un plateau mobile dont une extrémité est reliée par un mécanisme d'articulation au fond du caisson et dont une autre extrémité est munie d'une roulette d'appui, le plateau mobile étant déplaçable entre une position de rangement, en laquelle le plateau est escamoté le long d'une grande face du caisson, et une position de service en laquelle le plateau forme un angle choisi avec ladite grande face du caisson, en sorte que la roulette d'appui peut reposer au sol et former avec les deux roulettes du bagage un support à trois roues pour transporter un utilisateur en position debout sur le plateau et se tenant à la poignée.

Ainsi, le bagage de l'invention est muni d'un plateau mobile pouvant être placé soit dans une position de rangement le long du caisson, soit dans une position de service pour former alors une sorte de marchepied supporté par les deux roulettes du caisson et la roulette d'appui du plateau à la manière d'un tricycle.

Dans la position de rangement, le bagage est utilisé dans le mode de portage habituel, le plateau mobile étant inopérant.

Dans la position de service, le plateau mobile est opérationnel. L'utilisateur est alors debout sur le plateau et se tient en même temps à la poignée. Il peut alors appuyer un pied au sol par intermittence pour faire avancer le bagage à la manière d'une patinette.

Ainsi dans la position de service l'utilisateur se trouve placé derrière le caisson par rapport au sens de déplacement, les deux roulettes du caisson étant disposées en avant par rapport à la roulette d'appui du plateau.

Le passage de la position de rangement à la position de service, ou inversement, peut se faire très rapidement en offrant ainsi une grande souplesse de fonctionnement à l'utilisateur.
Un bagage comportant les caractéristiques du préambule de la revendication 1 est connu par FR-A-2818100.
Le bagage de l'invention comporte, en plus du plateau mobile, une motorisation embarquée dans le caisson apte à être actionnée à la demande de l'utilisateur pour lui permettre d'être transporté sans effort avec le caisson.

Le caisson loge un moteur électrique relié à une batterie d'alimentation pour entraîner en rotation l'une au moins des roulettes à la demande de l'utilisateur.

Le poids et l'encombrement supplémentaires engendrés par la motorisation et le plateau peuvent être minimisés pour ne pas entraîner une surcharge excessive et ne pas pénaliser le volume utile du caisson.

Dans la description qui suit, faite seulement à titre d'exemple, on se réfère aux dessins annexés, sur lesquels :
- la figure 1 est une vue de côté d'un bagage selon l'invention représenté en position de service, un utilisateur se tenant debout sur le plateau mobile ;
- la figure 2 est une vue par l'arrière du bagage de la figure 1, sans l'utilisateur ;
- la figure 3 est une vue de côté du bagage avec le plateau mobile en position de rangement, le bagage étant tiré par un utilisateur ;
- la figure 4 est une vue de côté du bagage, le plateau mobile étant représenté dans trois positions : une position de rangement, une position de service et une position intermédiaire dite d'ouverture amortie ;
- la figure 5 est une vue en perspective analogue à la figure 4 montrant le plateau mobile dans les mêmes trois positions ;
- la figure 6 est une vue partielle en perspective du bagage montrant des moyens de motorisation associés à l'une des roulettes du caisson :
- la figure 7 est une autre vue partielle en perspective des moyens de motorisation et de la roulette associée ;
- la figure 8 est une vue de dessus correspondant à la figure 6 ; et
- la figure 9 est une vue partielle de côté, analogue à la figure 4, montrant un mécanisme de verrouillage du plateau et des béquilles escamotables.

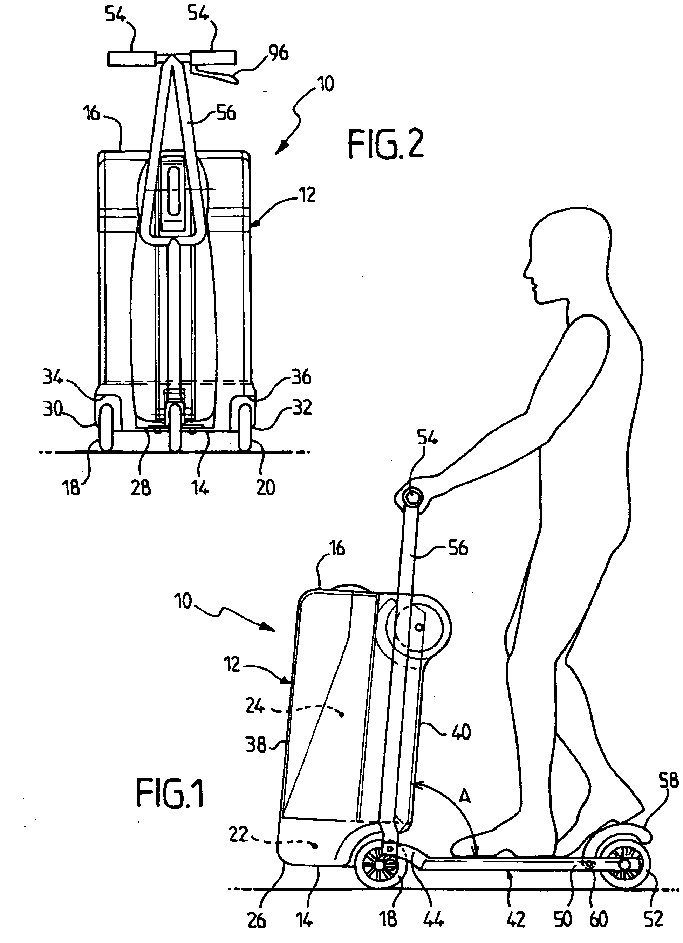

On se réfère d'abord à la figure 1 qui montre de côté un bagage selon l'invention désigné dans son ensemble par la référence 10. Le bagage 10 comprend un caisson 12, dans l'exemple de forme générale parallélépipédique, disposé dans une position sensiblement verticale. Le caisson 12 comprend un fond 14 constitué ici par une face de forme générale rectangulaire et par un sommet 16 constitué également par une face de forme générale rectangulaire.

Le fond 14 du caisson 12 est muni de deux roulettes espacées 18 et 20 dont l'une au moins (ici la roulette 18) peut être entraînée en rotation par des moyens de motorisation (décrits plus loin) logés dans un compartiment technique 22 situé dans la région du fond et surmonté par un compartiment utile 24 destiné à loger les articles à transporter dans le caisson 12.

Le fond 14 du caisson 12 comporte deux grands côtés, un grand côté avant 26 et un grand côté arrière 28 et deux petits côtés 30 et 32. Les deux roulettes 18 et 20 sont situées respectivement à proximité de deux petits côtés 30, 32 en étant disposées aux extrémités d'un essieu s'étendant parallèlement aux grands côtés et plus particulièrement à proximité du grand côté arrière 28.

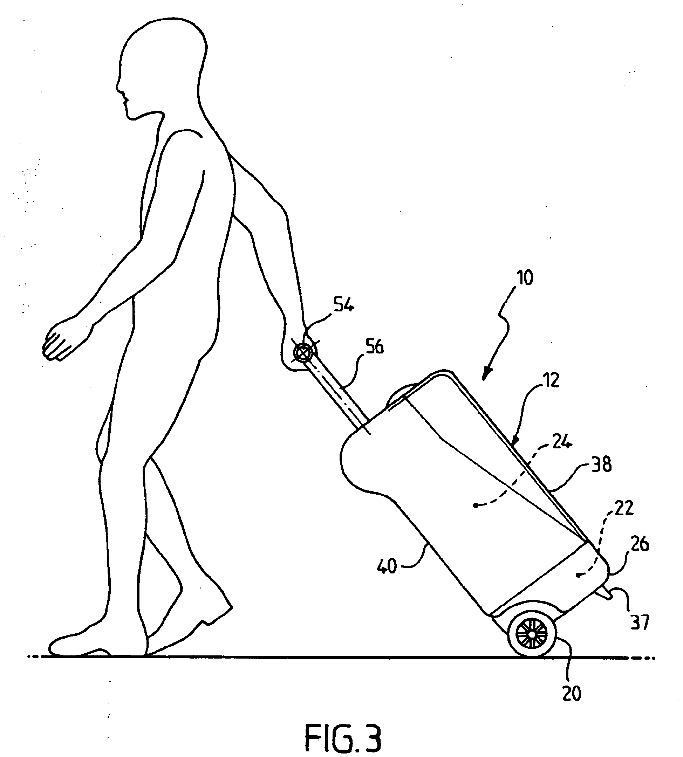

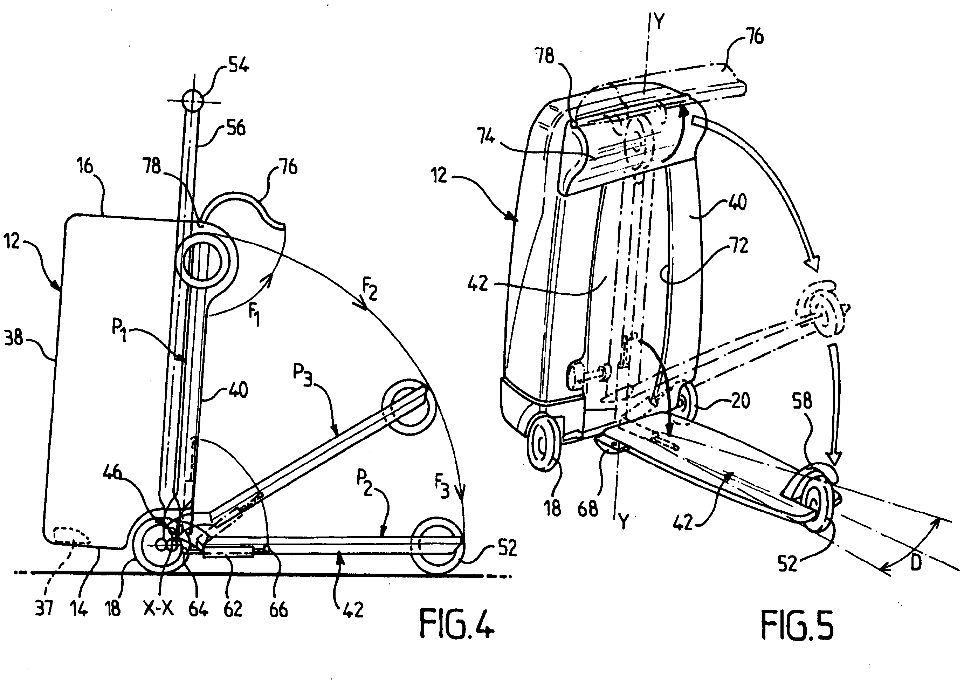

Dans le fond 14 du caisson sont aménagés des passages de roue 34 et 36 accueillant respectivement les roulettes 18 et 20 (figure 2). Le fond 14 comprend en outre au moins une béquille escamotable 37 déplaçable entre une position sortie (figure 3) et une position rentrée (figures 1 et 4). Dans l'exemple deux béquilles 37 sont situées près du grand côté avant 26. Le fonctionnement de ces béquilles sera décrit en détail plus loin.

Le caisson est limité en outre principalement par une face avant 38, une face arrière 40 appelée aussi « grande face », et deux autres faces latérales (non référencées).

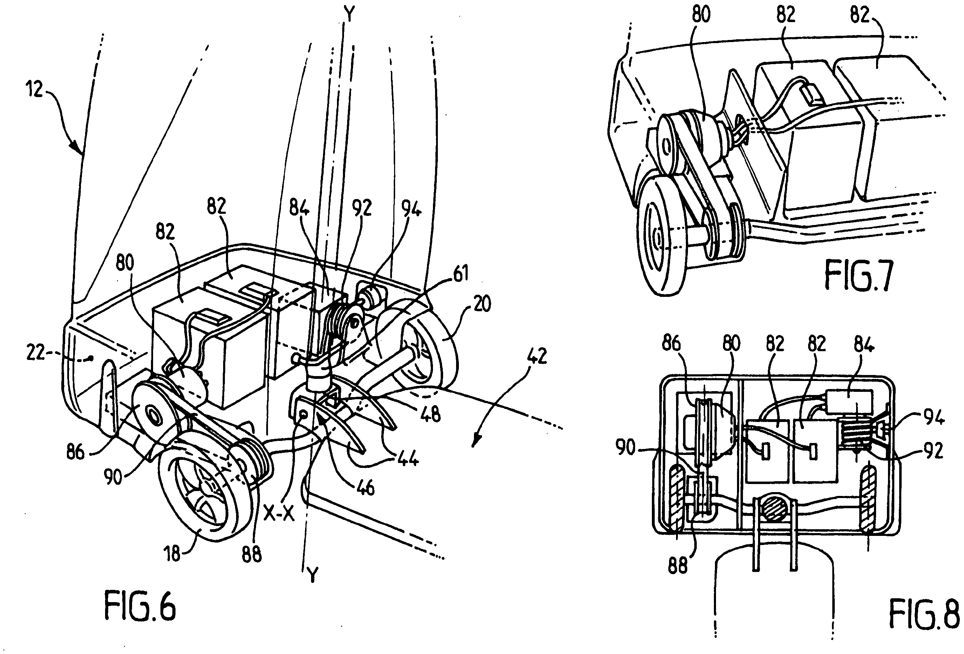

Le bagage 10 de l'invention comprend en outre un plateau mobile 42 dont une extrémité avant 44 est réalisée sous la forme d'une fourche (figure 6) formant un mécanisme d'articulation 46 avec une bride 48 montée en partie inférieure de la face arrière 40 du caisson près du fond 14. Le plateau mobile 40 comporte une extrémité arrière 50 qui est munie d'une roulette d'appui 52.

Le caisson 12 est prolongé à son sommet par une poignée double 54 montée à une extrémité d'un manche télescopique 56 logé dans le caisson le long de la grande face 40 (face arrière) de ce dernier. La poignée peut se déplacer d'une position escamotée proche du sommet du caisson (non représenté) à une position télescopée, éloignée du sommet du caisson, comme représenté sur les figures 1 et 2. L'utilisateur peut alors se tenir à la poignée avec ses deux mains, comme on le voit sur la figure 1.

La roulette d'appui 52 est surmontée par un protège-roue 58 monté pivotant autour d'un axe 60 et faisant également office de frein. Comme on le voit sur la figure 1, l'utilisateur peut, à l'aide du pied, appuyer sur le protège-roue 58 pour freiner la roulette d'appui 52.

Le plateau mobile 42 peut en outre prendre une position de rangement en laquelle il est escamoté le long de la grande face 40 du caisson, comme esquissé également sur les figures 1 et 2. Le déplacement de la position de rangement à la position de service, et inversement, se fait par un pivotement d'approximativement 90°. Dans la position de service représentée aux figures 1 et 2, le plateau forme un angle choisi A, ici de sensiblement 90°, avec la grande face 40 du caisson.

Dans la position de service, la roulette d'appui 52 peut reposer au sol et former avec les deux roulettes 18 et 20 du caisson un support à trois roues pour transporter l'utilisateur comme montré sur la figure 1. Ce support à trois roues s'apparente à une sorte de tricycle, dont les roulettes 18 et 20 forment les roues avant et la roulette d'appui 52 forme la roue arrière, le caisson 12 étant disposé en avant de l'utilisateur dans le sens normal d'avancement.

Le mécanisme d'articulation 46 comporte ici une double articulation, pour permettre d'une part le pivotement précité suivant l'angle A autour d'un axe X-X (figures 4 et 6), et d'autre part un débattement angulaire limité D autour d'un axe Y-Y comme montré à la figure 5. Ce débattement angulaire, qui peut être par exemple de 10°, permet au bagage de braquer.

L'extrémité avant 44 du plateau mobile pivote par rapport à la bride 48 autour de l'axe X-X, qui est sensiblement horizontal dans la position d'utilisation du bagage. La bride 48 peut elle-même pivoter autour de l'axe Y-Y, perpendiculaire à l'axe X-X, qui est sensiblement vertical dans la position d'utilisation du bagage. La bride 48 est ici montée pivotante à l'extrémité inférieure d'une colonne 61 (figure 6) s'étendant le long de la grande face 40 du caisson. En variante la bride 48 pourrait être reliée à la colonne 61 par un élément déformable autorisant un mouvement de rotation ou de torsion sur un intervalle angulaire limité.

Lorsque le plateau est dans la position escamotée (figure 3) le bagage peut être tiré au sol de la manière habituelle par un utilisateur comme montré à la figure 3. Dans ce cas, l'utilisateur tire le bagage 10 qui est alors disposé derrière lui, comme un bagage classique à roulettes, la poignée 54 étant en position sortie, donc éloignée du sommet 16 du caisson.

On se réfère maintenant aux figures 4 et 5 qui montrent trois positions du plateau mobile 42, à savoir une position de rangement P1 comme décrite précédemment, dans laquelle le plateau mobile est escamoté le long de la grande face 40 du caisson, une position de service P2 comme décrite précédemment où la roulette d'appui 52 vient reposer au sol et une position intermédiaire P3 dite « position ouverte amortie ».

Le bagage de l'invention comprend en outre un vérin amortisseur 62 (figures 4 et 5) dont une extrémité avant 64 est articulée au caisson 12 à distance de l'articulation 46 et dont une extrémité arrière 66 est articulée au plateau mobile 42.

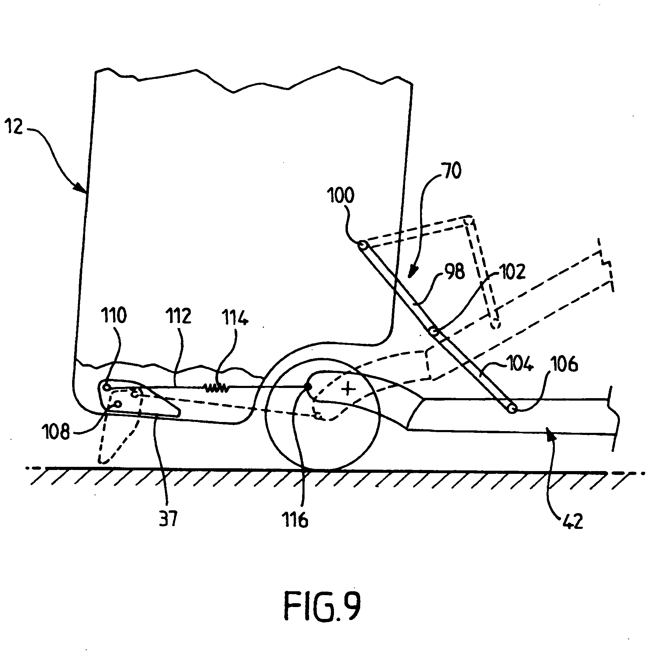

Ce vérin amortisseur 62 permet un mouvement de descente amortie du plateau mobile 42 à partir de la position de rangement P1 jusqu'à la position ouverte amortie P3, avec un débattement angulaire d'environ 60°. Le déplacement de la position ouverte amortie P3 à la position de service P2 correspond à un déplacement angulaire d'environ 30° et s'effectue au moyen d'une pédale d'assistance 68 (figure 5). Un mécanisme de verrouillage 70, qui sera décrit en détail plus loin (figure 9), permet de maintenir le plateau mobile dans la position de service. Ce mécanisme de verrouillage 70 peut être commandé au pied ou par une pédale d'actionnement portée par le plateau, par exemple par la pédale 68 déjà citée.

Comme on peut le voir plus particulièrement sur la figure 5, la grande face 40 (face arrière) du caisson comprend un évidement 72 formant une zone de stockage pour le plateau mobile 42 dans la position de rangement. Cet évidement 72 se prolonge en partie supérieure par un évidement 74 adapté pour loger la roulette d'appui 52. Le caisson 12 est muni en partie supérieure d'un volet mobile 76 propre à dissimuler la roulette d'appui 52 lorsque le plateau est dans la position de rangement. Dans l'exemple, ce volet est de forme incurvée et il est relié par un axe d'articulation 78 à la grande face 40 du caisson. Ce volet permet ainsi de dissimuler la roulette d'appui et d'empêcher tout contact de celle-ci avec l'utilisateur, par exemple avec ses vêtements.

Pour passer de la position de rangement à la position de service, le volet 76 est d'abord relevé manuellement comme montré par la flèche F₁ sur la figure 4. Ce relevage libère la roulette d'appui 52, ce qui permet de faire passer le plateau mobile de la position de rangement P₁ à la position d'ouverture amortie P₃ avec l'assistance du vérin 62, comme montré par la flèche F₂. Ensuite l'utilisateur doit appuyer sur la pédale 68 (figure 5) pour faire passer le plateau mobile de la position ouverte amortie P₃ à la position de service P₂. Le passage de la position P₃ à la position P₂ provoque aussi la rentrée des béquilles 37 qui étaient auparavant sorties, comme on le verra plus loin.

On se réfère maintenant plus particulièrement aux figures 6 à 8 pour décrire les moyens de motorisation logés dans le compartiment technique 22 situé en partie inférieure du caisson 12.

Ces moyens comprennent un moteur électrique 80 alimenté par une batterie rechargeable 82 (ici une batterie double), elle-même reliée à un chargeur électrique 84. Le moteur électrique 80, la batterie 82 et d'autres équipements tels que le chargeur 84 sont logés dans le compartiment technique 22.

Le moteur électrique 80 est relié à l'une au moins des roulettes du caisson, ici la roulette 18, par un mécanisme d'entraînement pour assurer son entraînement en rotation. Ce mécanisme comprend une poulie 86 calée sur l'axe du moteur, une poulie 88 reliée à la roulette 18 par l'intermédiaire d'un mécanisme à roue libre (non représenté) et une courroie 90 s'enroulant autour des poulies 86 et 88.

Le chargeur 84 est muni d'un cordon électrique 92 pour le raccordement au secteur électrique. Dans l'exemple, ce cordon électrique est monté sur un mécanisme à enrouleur et il se termine par une prise électrique 94 pour le raccordement au secteur. Ainsi, pour recharger la ou les batteries, il convient de dérouler le cordon 92 et de brancher la prise électrique 94 sur le secteur. Une fois l'opération de chargement terminée, le cordon vient s'escamoter dans le compartiment technique grâce au mécanisme à enrouleur.

Lorsque le plateau est dans la position de service, il suffit à l'utilisateur d'actionner le moteur électrique au moyen d'une manette 96 (figure 2) située sur la poignée 54. Lorsque le moteur est arrêté, le bagage peut se déplacer grâce au mécanisme à roue libre. L'utilisateur peut à tout moment freiner le bagage en appuyant sur le protège-roue 58 faisant office de frein.

L'ensemble de motorisation logé dans le compartiment technique peut être réalisé de façon suffisamment compacte pour ne pas affecter le volume utile du caisson. De même, le plateau mobile et sa roulette d'appui peuvent facilement s'escamoter dans les évidements 72 et 74 et ne pas pénaliser le volume utile du caisson.

En principe, le poids et l'encombrement entraînés par la motorisation et le plateau mobile ne sont pas de nature à entraîner une surcharge de poids ni à pénaliser le volume utile du caisson.

Dans un exemple de réalisation, le moteur électrique possède une puissance inférieure à 250W pour satisfaire aux réglementations. La vitesse maximale est limitée à 6Km/h pour éviter l'obligation de port du casque. Le poids à vide du bagage est d'environ 13 Kg et la capacité d'emport est d'environ 35 litres. On utilise avantageusement une batterie du type NiMH en raison de ses performances supérieures à celles des batteries au plomb. Une telle batterie permet 1000 cycles de rechargement et sa durée de charge est au maximum de 4 heures.

Le mécanisme de verrouillage 70 peut être par exemple réalisé sous la forme d'un mécanisme à compas comme représenté sur la figure 9. Ce mécanisme comprend une biellette 98 articulée autour d'un axe 100 au caisson 12 et articulée autour d'un axe 102 à une deuxième biellette 104, laquelle est articulée autour d'un axe 106 au plateau mobile 42. Dans la position de service les biellettes 98 et 104 (représentées en trait plein) sont sensiblement alignées, l'axe 102 étant légèrement rentré par rapport à l'alignement des axes 100 et 106 pour permettre le verrouillage. Dans la position d'ouverture amortie les biellettes (représentées en trait interrompu) forment un angle à la manière d'une genouillère.

Comme on le voit aussi sur la figure 9, les béquilles 37 sont chacune montées pivotantes autour d'un axe 108 et elles sont reliées autour d'un axe d'articulation 110 à une extrémité d'une tige de liaison 112 incorporant un ressort 114. L'autre extrémité de la tige de liaison 112 est articulée sur un prolongement 116 de l'extrémité avant 44 du plateau mobile 42.

Les béquilles escamotables 37 sont déplaçables entre une position sortie lorsque le plateau est en position de rangement et une position rentrée lorsque le plateau est en position de service. Lorsque le plateau est déplacé de la position de rangement à la position de service, les béquilles initialement en position sortie commencent à pivoter vers la position rentrée approximativement à partir de la position demi ouverte.

L'invention n'est pas limitée à la forme de réalisation décrite précédemment à titre d'exemple et peut s'étendre à d'autres variantes.

La forme et les dimensions du caisson peuvent varier en fonction des utilisations souhaitées. Le caisson peut être muni d'autres équipements, par exemple de roulettes supplémentaires, d'une poignée additionnelle fixe, etc.

L'invention offre ainsi un bagage dont le déplacement, notamment sur de grandes distances, est favorisé. Elle s'applique de façon générale aux bagages, tels que des valises, des sacoches, des malles, etc.

## Revendications

1. Bagage comprenant un caisson (12) avec un fond (14) muni de deux roulettes espacées (18, 20) et un sommet (16) prolongé par une poignée (54) pour le déplacement du caisson dans une position sensiblement verticale, ainsi qu'un plateau mobile (42) dont une extrémité (44) est reliée par un mécanisme d'articulation (46) au fond du caisson et dont une autre extrémité (50) est munie d'une roulette d'appui (52), le plateau mobile (42) étant déplaçable entre une position de rangement, en laquelle le plateau est escamoté le long d'une grande face (40) du caisson, et une position de service en laquelle le plateau forme un angle choisi (A) avec ladite grande face (40) du caisson, en sorte que la roulette d'appui (52) peut reposer au sol et former avec les deux roulettes (18, 20) du caisson un support à trois roues pour transporter un utilisateur en position debout sur le plateau et se tenant à la poignée (54), **caractérisé en ce que** le caisson (12) loge un moteur électrique (80) relié à une batterie d'alimentation (82) pour entraîner l'une au moins des roulettes (18, 20) sur commande, le caisson (12) comprenant un compartiment technique (22) situé dans la région du fond pour loger le moteur électrique (80), la batterie (82) et d'autres équipements associés (84) et un compartiment utile (24) surmontant le compartiment technique (22).

2. Bagage selon la revendication 1, **caractérisé en ce qu'**il comprend un mécanisme de verrouillage (70), en particulier du type à compas, pour maintenir le plateau (42) en position de service.

3. Bagage selon l'une des revendications 1 et 2, **caractérisé en ce que**, dans la position de service, l'angle choisi (A) que forme le plateau (42) avec la grande face (40) du caisson (12) est sensiblement de 90°.

4. Bagage selon l'une des revendications 1 à 3, **caractérisé en ce qu'**il comprend un vérin amortisseur (62) articulé entre le caisson (12) et le plateau (42) pour permettre un mouvement de descente amorti du plateau à partir de la position de rangement (P₁) jusqu'à une position ouverte amortie (P₃), située entre la position de rangement (P₁) et la position de service (P₂).

5. Bagage selon la revendication 4, **caractérisé en ce que** le plateau (42) comporte une pédale d'assistance (68) pour permettre à l'utilisateur de déplacer le plateau de la position ouverte amortie (P₃) à la position de service (P₂).

6. Bagage selon l'une des revendications 1 à 5, **caractérisé en ce que** le caisson (12) est muni d'un volet mobile (76) propre à dissimuler la roulette d'appui (52) lorsque le plateau (42) est dans la position de rangement (P₁).

7. Bagage selon l'une des revendications 1 à 6, **caractérisé en ce que** le fond (14) du caisson (12) est de forme générale rectangulaire avec deux grands côtés (26, 28) et deux petits côtés (30, 32), et **en ce que** les deux roulettes (18, 20) sont situées respectivement à proximité des deux petits côtés (30, 32) en étant disposées aux extrémités d'un essieu s'étendant parallèlement aux grands côtés (26, 28).

8. Bagage selon la revendication 7, **caractérisé en ce que** la grande face (40) du caisson se raccorde au fond (14) par l'un (28) des grands côtés du fond.

9. Bagage selon l'une des revendications 1 à 8, **caractérisé en ce que** le fond (14) du caisson (12) comprend au moins une béquille escamotable (37) déplaçable entre une position sortie lorsque le plateau () est en position de rangement et une position rentrée lorsque le plateau est en position de service.

10. Bagage selon l'une des revendications 1 à 9, **caractérisé en ce que** le moteur électrique (80) est relié à l'une au moins des roulettes par un mécanisme d'entraînement, en particulier par un mécanisme à courroie (90).

11. Bagage selon l'une des revendications 1 à 10, **caractérisé en ce que** la batterie (82) est une batterie rechargeable reliée à un chargeur (84) logé dans le caisson (12) et muni d'un cordon électrique (86) de raccordement au secteur.

12. Bagage selon l'une des revendications 1 à 11, **caractérisé en ce que** la poignée (54) comporte une manette (96) pour commander le fonctionnement du moteur électrique (90).

13. Bagage selon l'une des revendications 1 à 12, **caractérisé en ce que** la poignée (54) est montée à une extrémité d'un manche télescopique (56) logé dans le caisson le long de la grande face (40) de ce dernier, en sorte que la poignée peut se déplacer d'une position escamotée, proche du sommet du caisson, à une position télescopée, éloignée du sommet du caisson.

## Claims

1. Piece of luggage comprising a box (12) with a base (14) fitted with two spaced-apart castors (18, 20) and a top (16) extended by a handle (54) for moving the box into a substantially vertical position, and a movable platform (42) one end (44) of which is connected by an articulation mechanism (46) to the base of the box, the other end (50) being provided with a support castor (52), the movable platform (42) being displaceable between a storage position in which the platform is retracted along a large surface side (40) of the box, and an operating position in which the platform forms a selected angle (A) with the said large surface (40) of the box, so that the support castor (52) is able to rest on the ground and form, with the two castors (18, 20) of the box, a three-wheeled support for carrying a user in a standing position on the platform and holding on to the handle (54), **characterised in that** the box (12) houses an electric motor (80) connected to a supply battery (82) for driving at least one of the castors (18, 20) on command, the box (12) comprising a technical compartment (22) located in the region of the base to house the electric motor (80), the battery (82) and other associated equipment (84), and a useful compartment (24) surmounting the technical compartment (22).

2. Piece of luggage according to claim 1, **characterised in that** it comprises a locking mechanism (70), particularly of the calliper type, for holding the platform (42) in the operating position.

3. Piece of luggage according to one of claims 1 and 2, **characterised in that** in the operating position the selected angle (A) formed by the platform with the large surface (40) of the box (12) is substantially 90°.

4. Piece of luggage according to one of claims 1 to 3, **characterised in that** it comprises a shock-absorbing jack (62) articulated between the box (12) and the platform (42) to allow a cushioned descent of the platform from the storage position (P₁) to a cushioned open position (P₃), located between the storage position (P₁) and the operating position (P₂).

5. Piece of luggage according to claim 4, **characterised in that** the platform (42) comprises an assistance pedal (68) to enable the user to move the platform from the cushioned open position (P₃) to the operating position (P₂).

6. Piece of luggage according to one of claims 1 to 5, **characterised in that** the box (12) is provided with a movable flap (76) adapted to conceal the support castor (52) when the platform (42) is in the storage position (P₁).

7. Piece of luggage according to one of claims 1 to 6, **characterised in that** the base (14) of the box (12) is generally rectangular in shape with two long sides (26, 28) and two short sides (30, 32), and **in that** the two castors (18, 20) are respectively located close to the two short sides (30, 32), being arranged at the ends of an axle extending parallel to the long sides (26, 28).

8. Piece of luggage according to claim 7, **characterised in that** the large surface (40) of the box is connected to the base (14) by one (28) of the long sides of the base.

9. Piece of luggage according to one of claims 1 to 8, **characterised in that** the base (14) of the box (12) comprises at least one retractable strut (37) that is movable between an extended position when the platform is in the storage position and a retracted position when the platform is in the operating position.

10. Piece of luggage according to one of claims 1 to 9, **characterised in that** the electric motor (80) is connected to at least one of the castors by a drive mechanism, particularly a belt mechanism (90).

11. Piece of luggage according to one of claims 1 to 10, **characterised in that** the battery (82) is a rechargeable battery connected to a charger (84) housed in the box (12) and provided with an electric lead (86) for connecting to the mains.

12. Piece of luggage according to one of claims 1 to 11, **characterised in that** the handle (54) comprises a lever (96) for controlling the operation of the electric motor (90).

13. Piece of luggage according to one of claims 1 to 8, **characterised in that** the handle (54) is mounted at one end of a telescopic shaft (56) housed in the box along the large surface (40) of the latter, so that the handle is able to move from a retracted position, close to the top of the box, to a telescopically extended position remote from the top of the box.

## Patentansprüche

1. Gepäckstück mit einem .Kasten (12) mit einem Boden (14), der mit zwei beabstandeten Rollen (18, 20) versehen ist und einem Scheitel (16), der von einem Griff (54) verlängert ist, für das Bewegen des Kastens in eine im Wesentlichen vertikale Position, sowie einer beweglichen Platte (42), von der ein Ende (44) mit einem Gelenkmechanismus (46) mit dem Boden des Kastens verbunden ist, und von der ein anderes Ende (50) mit einer Stützrolle (52) versehen ist, wobei die bewegliche Platte (42) zwischen einer Aufräumposition, in der die Platte entlang einer großen Seite (40) des Kastens eingezogen ist, und einer Betriebsposition, in der die Platte einen gewählten Winkel (A) mit der großen Seite (40) des Kastens bildet, bewegbar ist, derart, dass die Stützrolle (52) auf dem Boden ruhen kann und mit den beiden Rollen (18, 20) des Kastens eine Stütze mit drei Rollen bildet, um einen Benutzer in aufrechter Position auf der Platte und sich an dem Griff (54) haltend zu transportieren, **dadurch gekennzeichnet, dass** der Kasten (12) einen elektrischen Motor (80) aufnimmt, der mit einer Batterie (82) verbunden ist, um wenigstens eine der Rollen (18, 20) auf Befehl anzutreiben, wobei der Kasten (12) ein technisches Abteil (22) aufweist, das sich im Bereich des Bodens befindet, um den Elektromotor (80), die Batterie (82) und andere zugehörige Ausrüstungen (84) sowie ein nützliches Abteil (24) aufzunehmen, welches das technische Abteil (22) überhöht.

2. Gepäckstück nach Anspruch 1, **dadurch gekennzeichnet, dass** es einen Verriegelungsmechanismus (70), insbesondere vom Typ eines Türfeststellers aufweist, um die Platte (42) in Betriebsposition zu halten.

3. Gepäckstück nach einem der Ansprüche 1 oder 2, **dadurch gekennzeichnet, dass** in der Betriebsposition der gewählte Winkel (A), den die Platte (42) mit der großen Seite (40) des Kastens (12) einnimmt, im Wesentlichen 90° ist.

4. Gepäckstück nach einem der Ansprüche 1 bis 3, **dadurch gekennzeichnet, dass** es einen Zylinderstoßdämpfer (62) aufweist, der zwischen dem Kasten (12) und der Platte (42) angelenkt ist, um eine gedämpfte Abwärtsbewegung der Platte ausgehend von der Aufräumposition (P₁) bis zu einer gedämpften Öffnungsposition (P₃) zu ermöglichen, die sich zwischen der Aufräumposition (P₁) und der Betriebsposition (P₂) befindet.

5. Gepäckstück nach Anspruch 4, **dadurch gekennzeichnet, dass** die Platte (42) ein Unterstützungspedal (68) aufweist, um dem Benutzer zu ermöglichen, die Platte von der geöffneten gedämpften Position (P₃) in die Betriebsposition (P₂) zu bewegen.

6. Gepäckstück nach einem der Ansprüche 1 bis 5, **dadurch gekennzeichnet, dass** der Kasten (12) mit einer beweglichen Klappe (76) versehen ist, die geeignet ist, die Stützrolle (52) zu kaschieren, wenn sich die Platte (42) in der Aufräumposition (P₁) befindet.

7. Gepäckstück nach einem der Ansprüche 1 bis 6, **dadurch gekennzeichnet, dass** der Boden (14) des Kastens (12) von allgemein rechteckiger Form mit zwei großen Seiten (26, 28) und zwei kleinen Seiten (30, 32) ist, und dass die beiden Rollen (18, 20) entsprechend in der Nähe der beiden kleinen Seiten (30, 32) angeordnet sind, wobei sie an den Enden eines Achslagers angeordnet sind, das sich parallel zu den großen Seiten (26, 28) erstreckt.

8. Gepäckstück nach Anspruch 7, **dadurch gekennzeichnet, dass** die große Seite (40) des Kastens mit dem Boden (14) durch eine (28) der großen Seiten des Bodens verbunden ist.

9. Gepäckstück nach einem der Ansprüche 1 bis 8, **dadurch gekennzeichnet, dass** der Boden (14) des Kastens (12) wenigstens einen einziehbaren Ständer (37) aufweist, der zwischen einer Austrittsposition, wenn sich die Platte in Aufräumposition befindet und einer eingezogenen Position, wenn die Platte sich in Betriebsstellung befindet, bewegbar ist.

10. Gepäckstück nach einem der Ansprüche 1 bis 9, **dadurch gekennzeichnet, dass** der Elektromotor (80) mit wenigstens einer der Rollen durch ein Antriebsmechanismus, insbesondere einen Riemenmechanismus (90) verbunden ist.

11. Gepäckstück nach einem der Ansprüche 1 bis 10, **dadurch gekennzeichnet, dass** die Batterie (82) eine wiederaufladbare Batterie ist, die mit einem Ladegerät (84) verbunden ist, das in dem Kasten (12) aufgenommen ist und mit einem elektrischen Verbindungsdraht (86) mit dem Abschnitt verbunden ist.

12. Gepäckstück nach einem der Ansprüche 1 bis 11, **dadurch gekennzeichnet, dass** der Griff (54) einen Handgriff (96) aufweist, um den Betrieb des Elektromotors (90) zu steuern.

13. Gepäckstück nach einem der Ansprüche 1 bis 12, **dadurch gekennzeichnet, dass** der Griff (54) an einem Ende mit einem Teleskoparm (56) versehen ist, der in dem Kasten entlang der großen Seite (40) von letzterem aufgenommen ist, derart, dass der Griff sich von einer eingezogenen Position in der Nähe des Scheitels des Kastens zu einer Teleskopposition entfernt von dem Scheitel des Kastens bewegen kann.
